Europäisches Patentamt

European Patent Office

Office européen des brevets

(19)

(11) Publication number: **0 321 222**
**A2**

## (12) EUROPEAN PATENT APPLICATION

(21) Application number: 88311843.2

(22) Date of filing: 14.12.88

(51) Int. Cl.⁴: **H 04 M 1/21**

(30) Priority: 15.12.87 JP 316966/87

(43) Date of publication of application:
21.06.89 Bulletin 89/25

(84) Designated Contracting States: DE FR GB

(71) Applicant: Hayashibara, Ken
9-8, 4-chome, Higashi-Furumatsu
Okayama-shi Okayama (JP)

(72) Inventor: Masaki, Kazumi
7-3, 4-chome Fujishirodai
Suita-shi Osaka (JP)

(74) Representative: Palmer, Roger et al
Page, White and Farrer 5 Plough Place New Fetter Lane
London EC4A 1HY (GB)

(54) Telephone.

(57) The intelligibility of a telephone having a first receiver is improved by equipping thereto a second receiver in such manner that sound from the two receivers is positioned in the user's head, preferably, approximately in the center of the user's head. The second receiver is provided by electrically connecting a loudspeaker with the first receiver, if necessary, through an amplifier and a variable resistor. Sound received from the two receivers is positioned in the user's head by controlling the distance between the first and second receivers.

FIG.4

EP 0 321 222 A2

Bundesdruckerei Berlin

**Description**

# TELEPHONE

The present invention relates to a telephone, in particular, to that wherein received sound from the receivers is positioned in the user's head in order to attain a high intelligibility.

Conventional desk- and pay-phones have the drawback that they tend to attain a decreased intelligibility because only one receiver is provided with a speaker and the user hears a received sound with one ear.

In "candlestick phone", a mouthpiece is united with a cradle, and a receiver cord is provided in such manner that it renders a single receiver operable with a degree of freedom. Candlestick phone, however, has the drawback that the user hears a received sound with one ear because candlestick phone also has only one receiver as desk- and pay-phones.

Microphone-attached headphones are used in telephone exchange to attain a satisfactorily high intelligibility. The user must cumbersomely put it on the head in order to attain such an intelligibility.

The present invention provides a telephone which is free of such a drawback and superior in intelligibility.

An object of the present invention is to equip a second receiver to a telephone having a first receiver in such manner that a received sound from the two receivers is positioned in the user's head.

More particularly, the present invention relates to a telephone, characterized in that a second receiver is added to a telephone having only one receiver in such manner that a received sound from the two receivers is positioned in the user's head.

Preferably the sound receiver is located so as to direct sound towards the user's head. Preferably the second receiver is mounted on a support so that sound may be directed towards the user's head on the opposite side of the head from the first receiver. Preferably the distance of the second receiver from the user's head and/or the volume of the second receiver is adjustable to balance the sound received from the two receivers so that the sound appears to be located at the centre of the user's head.

The present invention will hereinafter be explained with reference to the accompanying drawings, in which:

FIG.1 is the circuit of an embodiment according to the invention;

FIGS. 2 and 3 are the perspective views of second receivers according to the invention; and

FIG. 4 is the front view of an embodiment according to the invention when in use.

Throughout the drawings, reference numeral (1) designates receiver; (2), speaker; (3), circuitry; (4), capacitor; (5), variable resistor; (6), amplifier; (7), loudspeaker; (8), phone base; (9), pliable supporting member; (10), case; (11), lead; and (12), plug.

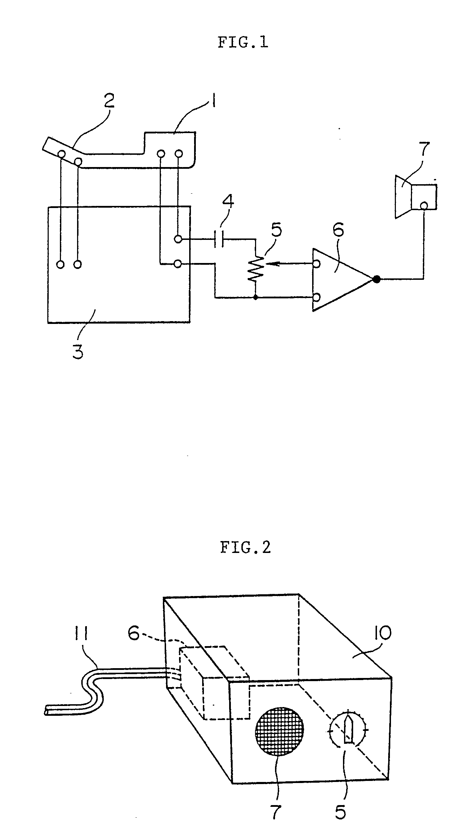

FIG.1 is the circuit of an embodiment according to the invention.

Reference numerals (1) and (2) designate a receiver and a speaker respectively which are connected with a circuitry (3) provided in a phone base. The receiver (1) is connected with an amplifier (6) through a capacitor (4) and a variable resistor (5), while an output terminal of the amplifier (6) is connected with a loudspeaker (7).

Desirably, the amplifier (6) substantially does not change the impedance of a telephone circuit when an input terminal of the amplifier (6) is connected with the receiver (1). When the capacitance of the capacitor (4), the resistance of the variable resistor (5) and the input impedance of the amplifier (6) are set to 0.1 microfarads, 10 kiloohms and 10 kiloohms respectively, the combined resistance thereof becomes about 8 kiloohms. Thus, the influence on the telephone circuit that may occur when the receiver (1) is connected thereto can be reduced to a negligible level with respect to the impedance of standard telephone circuit, i.e. 600 ohms.

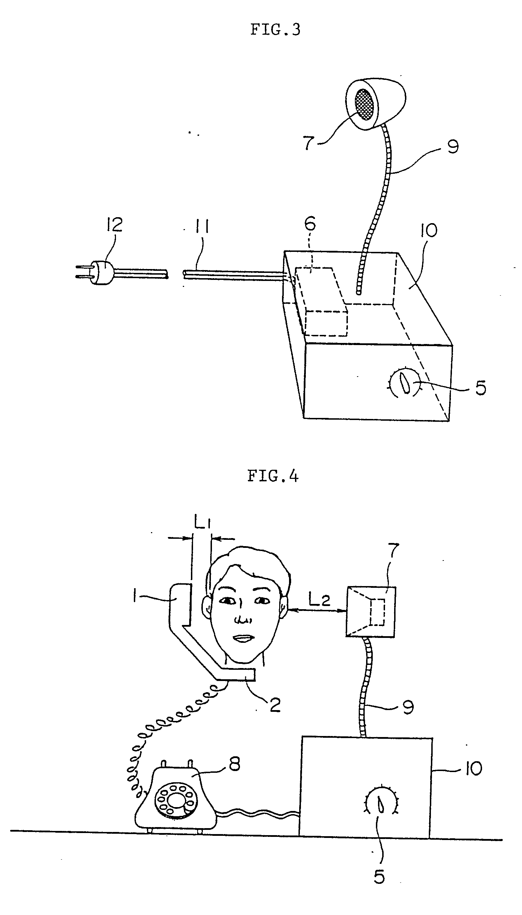

FIG.2 shows an embodiment wherein a second receiver is provided by enclosing an amplifier (6), a loudspeaker (7) and a variable resistor (5) in a case (10), and wherein the loudspeaker (7) is stationarily attached to the case (10). FIG.3 shows another embodiment wherein a second receiver is provided by enclosing an amplifier (6) and a variable resistor (5) in a case (10), and attaching to the case (10) a pliable supporting member (9), such as that of flexible shaft, having a loudspeaker (7) at its end. With this arrangement, the position of the loudspeaker (7) is freely adjustable.

FIG.4 is illustrative of the method of using the telephone according to the invention. Prior to its use, the phone base (8) containing a circuitry (3) and a second receiver as shown, for example, in FIG.3 are placed on a desk. When in use, the receiver (1) is put on the user's ear, and the position of the loudspeaker (7) is then adjusted at the side of the other user's ear. Thereafter, the variable resistor (5) is adjusted with respect to the distance between the user's ear and the loudspeaker (7) to a level where a received sound from the receiver (1) and loudspeaker (7) positions in the user's head, preferably, approximately in the center of the user's head.

In the case of using an amplifier, its desired output level varies dependently on the sound pressure level of the loudspeaker (7), as well as on the sound pressure that is required on the user's eardrum: Now representing the distance between the receiver (1) and the user's ear and that between the other user's ear and the loudspeaker (7) with symbols "$L_1$" and "$L_2$" respectively, the ratio of $L_1:L_2$ is usually 1:10 to 1:50. Thus, the output level of the amplifier is usually set to several watts or lower, preferably, 50 to 500 milliwatts.

To connect the phone base (8) with the second receiver, for example, a variable resistor with a switching means can be used as the variable resistor (5) so that the user can suspend a received sound from the second receiver. Furthermore, the phone base (8) and the second receiver can be arranged in such manner that they can be freely disconnected, for example, with a plug (12) provided at the end of a lead (11) as shown in Fig. 3. The volume of the second receiver is adjustable independently of the first receiver.

It will be seen that unlike headphones, the first and second receivers of the present invention are not physically connected together as a unit which needs to be worn by the user.

As described above, since in the present invention a second receiver is equipped to a telephone having only one receiver in such manner that a received sound from the receivers positions in the user's head, the telephone can attain a much higher intelligibility than conventional telephone. Thus, the present telephone is advantageously usable in telephones in general including pay phones.

Having described specific embodiments of my bearing, it is believed obvious that modifications and variations of my invention are possible in light of the above teachings.

## Claims

1. In a telephone having a first receiver, the improvement whereby the intelligibility is increased, comprising equipping a second receiver to the telephone in such manner that sound received from the two receivers is positioned in the user's head.

2. A telephone according to claim 1 wherein means is provided to balance the sound received from the two receivers so that the sound received appears to be located at the centre of the user's head.

3. A telephone according to claim 2 in which the second receiver is located on an adjustable support directing sound towards a user's head at a variable distance from the user's head.

4. A telephone according to claim 2 or claim 3 in which the volume emitted by the second receiver is adjustable independently of the first receiver.

5. The telephone of claim 1, wherein the distance between said first and second receivers is variable.

6. The telephone of claim 1, wherein said second receiver is a loudspeaker.

7. The telephone of claim 6, wherein said loudspeaker is connected with the first receiver through a capacitor, a variable resistor, and an amplifier.

8. The telephone of claim 6, wherein said loudspeaker is attached to one end of a pliable supporting member, the other end of said pliable supporting member being attached to a case member that encloses said capacitor, variable resistor and amplifier.

9. The telephone of claim 8, wherein said pliable supporting member is a flexible shaft.

10. The telephone of claim 1, wherein said second receiver is connected with said telephone by using a switching means.

11. The telephone of claim 1, wherein said second receiver is removably equipped to the telephone by using a plug.

FIG.1

FIG.2

FIG.3

FIG.4